# EUROPÄISCHE PATENTANMELDUNG

(11) **EP 2 604 902 A2**
(43) Veröffentlichungstag der Anmeldung: **19.06.2013**
(21) Anmeldenummer: 12190688.7
(22) Anmeldetag: 30.10.2012
(51) Int. Cl.: F16L 55/033

(54) **Kammer-Resonator zur Dämpfung von Geräuschen und Einzeltönen in Rohrleitungen**

(30) Priorität: 15.12.2011 DE 202011052317 U
(71) Anmelder: ELB-Form GmbH, 6773 Vandans (AT)
(72) Erfinder: Vierhauser, Alexander, 6714 Nüziders (AT); Schallert, Erwin, 6710 Nenzing (AT); Thoma, Michael, 6781 Bartholomäberg (AT)
(74) Vertreter: Neidl-Stippler, Cornelia

(57) **Zusammenfassung**

Die Erfindung betrifft einen Kammerresonator zur Dämpfung von Geräusch in einer Rohrleitung, mit mindestens zwei um eine Rohrleitung mit zuführender Rohrleitung (2) und ableitender Rohrleitung (5) verlaufenden Kammern (10, 10.1, 10.2), die über jeweils eine Verbindungsöffnung (11, 11.1, 11.2) zwischen Rohrleitungsinnerem und Kammer (10, 10.1, 10.2) zum Druckausgleich dazwischen mit dem Rohrleitungsinneren verbunden ist; wobei die Kammern (10, 10.1, 10.2) gebildet sind durch: trichterartige gestufte Rohrabschnitte (6), die einen aufgeweiteten Bereich (3) und einen nicht erweiterten Bereich (4) aufweisen, wobei der aufgeweitete Bereich (3) einen Durchmesser entsprechend der Summe des Rohrleitungsdurchmessers und zwei Kammerhöhen besitzt und der nicht aufgeweitete Bereich (4) Rohrleitungsdurchmesser hat; wobei Resonanzkammern (10, 10.1, 10.2) jeweils gebildet sind durch zwei ineinander befestigte trichterartig gestufte Rohrabschnitte (6), wobei die trichterartigen Rohrabschnitte (6) an ihren erweiterten Enden mit der oberen Stufe des vorangehenden trichterartigen Rohrabschnitts (6) dichtend verbunden sind und das untere Ende des jeweiligen trichterartig gestuften Rohrabschnitts (6) die Kammerinnenwand mit Verbindungsöffnung (11.1, 11.2) bildet; wobei die erste Resonanzkammer (10) gebildet ist durch den Endabschnitt der zuführenden Rohrleitung (2), auf dem ein als Kammerabschluss dienender Deckel (7) mit Rohrdurchgangsöffnung dicht angebracht ist und einem daran anschließenden trichterartig gestufter Rohrabschnitt (6), so dass zwischen Rohrende der zuführenden Rohrleitung (2) und der unteren Kante des trichterartigen gestuften Rohrabschnitts (6) eine erste Verbindungsöffnung (11) gebildet ist.

## Beschreibung

Die Erfindung betrifft einen Kammer-Resonator zur Dämpfung von Geräuschen und Einzeltönen in Rohrleitungen sowie Verfahren zu seiner Herstellung.

Rohrleitungen im Sinne der vorliegenden Erfindung sind ummantelte Räume mit gegenüber ihrer Längsabmessung kleinen Querabmessungen (Lüftungskanäle, Abgasrohre, Kamine etc.).

Es sind beispielsweise aus Schmidt, Helmut: Schalltechnisches Taschenbuch; 4. Auflage, Düsseldorf, 1989, verschiedene Resonatortypen zur Schalldämpfung in Rohrleitungen und Kanälen bekannt. Für die praktische Anwendung kommen zwei prinzipielle Ausführungsformen in Frage, die entweder auf Abzweigungen an oder von Querschnittsveränderungen in der Rohrleitung beruhen. Ein gebräuchlicher Resonatortyp ist z.B. der Helmholtz-Resonator, der im Prinzip aus einem Hohlraum besteht, der in der Regel durch eine oder mehrere Öffnungen mit der zu dämpfenden Leitung verbunden ist. Die Öffnungen sind dabei gleichmässig bzw. symmetrisch über die gemeinsame Fläche zwischen Kammer und Rohrleitung verteilt. Nachteilig ist, dass die Dämpfungswirkung eines Helmholtz-Resonators weitgehend auf den Bereich um eine einzige Frequenz, der Resonanzfrequenz des Systems, beschränkt bleibt. In den restlichen Frequenzbereichen liegt eine wesentlich geringere Pegelminderung vor.

Ein abgewandelter Vertreter dieses Resonatortyps ist der sogenannte Lochresonator. Er besteht im wesentlichen aus einem Hohlraum, der durch eine perforierte Platte mit einem gewissen Lochflächenanteil vom zu bedämpfenden Raum getrennt ist.

Bekannt ist ferner der sogenannte Pfeifenresonator. Die Wirkungsweise eines Pfeifenresonators beruht auf Interferenzen zwischen der ankommenden Schallwelle in der Rohrleitung und einer reflektierten Schallwelle. Die Reflexion tritt beispielsweise in an die Rohrleitung angekoppelten Rohrstücken oder an Räumen mit gegenüber der Rohrleitung grossen Querschnittsänderungen auf, in die die Rohrleitung noch hineinragt. Die dämpfende Wirkung der Interferenzerscheinungen ist dabei abhängig von der Länge der angekoppelten Rohrleitung bzw. der Länge, mit der die Rohrleitung noch in den Raum mit vergrössertem Querschnitt hineinragt. Die maximale Dämpfung eines solchen Pfeifenresonators liegt bei einer Wellenlänge, die dem Vierfachen der Länge des angekoppelten Rohres bzw. des hineinragenden Teiles der Rohrleitung entspricht (lambda /4-Pfeife).Weitere Dämpfungsbereiche liegen bei dem ungeradzahligen Vielfachen von dem so gegebenen lambda /4. lambda stellt dabei die Wellenlänge der Schallwelle im Ausbreitungsmedium in der Rohrleitung dar. Zum genauen Festlegen der Länge 1/4 lambda muss berücksichtigt werden, dass sich die physikalische Rohrlänge für die Luftschwingung um eine gewisse Strecke verlängert. Daher wird die physische Rohrlänge eines solchen Pfeifenresonators um eine Mündungskorrektur verkürzt.

Auf das o.g. Dokument wird zur Vermeidung von Wiederholungen in vollem Umfang bezug genommen.

Die bekannten Resonatoren waren in ihrer Herstellung aufwendig, führten zu unbrauchbaren Materialresten und benötigten verschiedenste Einzelkomponenten, wie Befestiger, was zu unerwünschtem Lagerhaltungaufwand und weiteren Bearbeitungsschritten führte..

Es ist daher Aufgabe der Erfindung, einen schalldämpfenden Resonator für Rohrleitungen zu entwickeln, der einfach hergestellt werden kann.

Die Aufgabe wird erfindungsgemäß durch einen Resonator mit den Merkmalen des Patentanspruches 1 gelöst. Ein vorteilhaftes Verfahren zu seiner Herstellung ergibt sich aus dem Patentanspruch 8. Vorteilhafte Weiterbildungen ergeben sich aus den abhängigen Ansprüchen.

Dadurch, dass die für die Dämpfung angeschlossenen, die Rohrleitung umgebenden Kammern im wesentlichen aus ähnlichen umgeformten Rohrabschnitten hergestellt sind, können in einfacher Weise Komponenten eingespart und Materialabfall vermieden werden und Verfahrensschritte, die bei bekannten Herstellungsverfahren notwendig waren, entfallen.

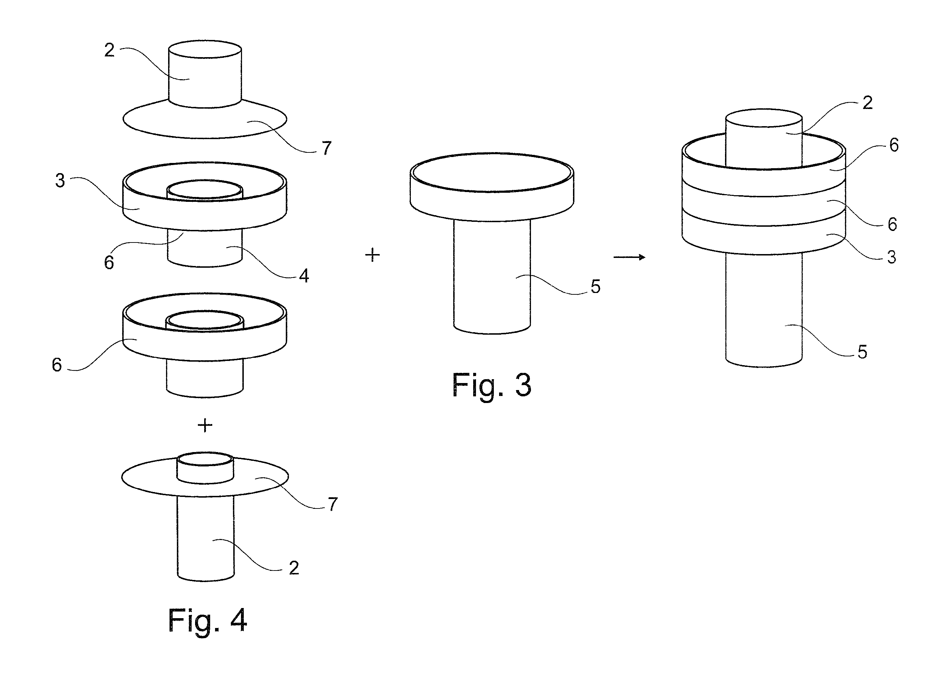

Dabei wird um das zuführende Rohr ein Deckel in Entfernung etwa einer Kammerlänge vom Rohrende zur Ausbildung der Begrenzung der ersten Kammer vorgesehen. Für weitere Kammern werden trichterartige Rohrabschnitte unterschiedlicher Längen aufeinandergesetzt, wobei deren Länge von den erwünschten Abmessungen der durch den jeweiligen trichterartigen Rohrabschnitts begrenzten weiteren Kammer abhängt, wie aus Fig. 3 ersichtlich.

Es kann günstig sein, daß das erste und zweite Rohr aus gleichem Material bestehen. Dann, wenn beide aus dem gleichen Material bestehen, können Recycling-Probleme umgangen werden wie auch Probleme, die durch verschiedene Ausdehnungskoeffizienten verschiedener Metalle entstehen könnten.

Es ist aber auch möglich, daß Rohrabschnitte aus unterschiedlichem Material bestehen - insbesondere, wenn an einen der beiden Rohrabschnitte andere Anforderungen hinsichtlich Temperaturresistenz, mechanische Stabilität etc. gestellt sind. Der jeweilige trichterartige Rohrabschnitt ist am nächsten trichterförmigen Rohrabschnitt dichtend befestigt, um so die Kammer zu bilden, wobei ein Deckel zum Abschluss der ersten Kammer um den Endbereich des zuführenden Rohrabschnitts vorgesehen wird. Das zuführende Rohr bildet dann die Innenwand der Resonanzkammer, die eine schlitzartige Öffnung offenlässt, durch die Kammer mit dem Rohrinneren verbunden ist.

Als Befestigungsverfahren bietet sich bspw. ein solches ausgewählt aus der Gruppe: Schweißen, Löten, Schrauben, Nieten, Falzen, an.

Ein typisches Material für einen Resonator im Automobilbereich ist zumindest teilweise Metall, wie Aluminiumblech, Stahlblech u. dgl. Für spezielle Anwendungen können aber auch Kunststoff oder Kombinationen von Kunststoff und Metall oder aber Verbundmaterialien eingesetzt werden, je nach Einsatz. So können Schalldämpfer durch dem Fachmann geläufige Materialwahl so ausgelegt werden, dass sie auch in Rohrleitungen, durch die z.T. auch mit korrosiven Stoffen verunreinigte Gasgemische geleitet werden, hohe Standzeiten besitzen.

Ein Verfahren zur Herstellung eines derartigen Mehrkammerresonators kann beinhalten:

Vorsehen von trichterartigen Rohrabschnitten mit im wstl. rechtwinkelig zueinander verlaufenden Abschnitten mit einem aufgeweiteten Bereich in Kammerlänge, mit einem Querschnitt entsprechend der Summe aus der doppelten Kammerhöhe und dem Rohrdurchmesser und einem Bereich mit kleinerem Querschnitt (Rohrdurchmesser) in Kammerlänge minus Verbindungsöffnungsbreite ; Vorsehen eines eine Erweiterung aufweisenden Rohrabschnitts, wobei die Erweiterung Kammerlänge hat und einen Querschnitt entsprechend der Summe aus der doppelten Kammerhöhe und dem Rohrdurchmesser; und Befestigen desselben auf dem ersten Rohrende in einem der Kammerlänge minus Verbindungsöffnungslänge entsprechenden Abstand, sodass eine erste Resonanzkammer zwischen der ersten Rohrleitungsende und dem eine Erweiterung aufweisenden Rohrabschnitt gebildet ist; Befestigen des Endes des eine Erweiterung aufweisenden Endbereichs der jeweiligen trichterartigen Rohrabschnitte am benachbarten aufgeweiteten Rohrabschnittkantenbereich unter Bildung einer Kammeraussenwand und Entstehen eines Verbindungssschlitzes zwischen dem nicht aufgeweiteten Endbereich des trichterartigen Rohrabschnitts und der unteren Kante des nachfolgenden trichterartigen Rohrabschnitts im Bereich der Kammer; und Befestigen eines Deckels am Rohrendabschnitt im Abstand einer Kammerlänge minus Länge der Verbindungsöffnung am ersten, nicht aufgeweiteten Rohrleitungsendabschnitt, wobei das aufgeweitete Ende des zweiten Rohrleitungsabschnitts und eine Kammeraußenwand und das Ende des zuführenden Rohrs eine Kammerinnenwand mit Verbindungsöffnung liefert.

Das Verfahren kann beinhalten, dass die mindestens eine stufenartige Erhebung an den trichterartigen Rohrabschnitten hergestellt wird ausgewählt durch: Stauchen; IHU; Tiefziehen; Stanzen, Drücken und andere, dem Fachmann geläufige Umformverfahren hergestellt wird.

Das Verbinden der Rohrabschnitte zum Resonator kann auf jede bekannte Weise welche dichte Verbindungen erlaubt, durchgeführt werden, so z.B. durch: Schweißen, Löten, Schrauben, Nieten, Falzen.

Dadurch kann das bisher notwendige Vorsehen von Einzelteilen, wie Befestigern, aufwendigen Zwischenblechen etc. zur Verbindung derartiger an- und abführender Rohrenden vermieden werden. Dadurch das Anfallen von Abfall weitgehend vermieden werden.

Dadurch, daß die Kammern des Resonators um zu dämpfende Rohre durch Einschieben von trichterartigen Rohrstücken eingesetzt werden können, ist es möglich, auch in gebogenen Leitungen beliebiger Länge und auch bei geringem Bauraum derartige Resonatoren vorzusehen. Es ist möglich, den erfindungsgemässen Resonator weitgehend aus einheitlichen trichterartigen Rohrabschnitten herzustellen, die in die zu dämpfende Rohrleitung eingefügt werden, was zu einem stark vereinfachten Herstellungsverfahren führt. Die baulichen Abmessungen des Resonators, wie die Länge der Kammer bzw. die Strecke, inwieweit der eine Rohrabschnitt in den ihn umgebenden erweiterten Rohrabschnitt hineinragt bzw. die Kammer begrenzt, bemisst sich im wesentlichen nach der erwünschten Frequenz des Resonators, wie dem Fachmann geläufig ist. Die Resonatoren wirken als Helmholtz-Resonatoren, somit lassen sich mit geeigneter Dimensionierung Resonanzfrequenzen festlegen, bei denen die Dämpfung wirkt. Eine geeignete Dimensionierung erschliesst sich dem Fachmann ohne weiteres.

Enthält das Gasgemisch in der zu dämpfenden Leitung keinen oder nur einen geringen Anteil an Schmutzpartikeln oder korrosiven Stoffen, so kann das Kammervolumen zur Schalldämmung auch mit geeignetem Material wie z.B. Stein-/Mineralwolle ganz oder teilweise gefüllt sein.

Im folgenden werden Ausführungsbeispiele erfindungsgemäßer Resonatoren anhand der Zeichnung beispielhaft erläutert. Dabei zeigen
Fig. 1 schematisch einen Mehrkammer-Resonator
Fig. 2 schematisch ein Verfahren zur Herstellung eines Mehrkammer-Resonators im Längsschnitt;
Fig. 3 schematisch ein Verfahren zur Herstellung eines Mehrkammer-Resonators in perspektivischer Ansicht; und
Fig. 4 eine Ausführungsform des Endes der zuführenden Rohrs mit aufgebrachtem Deckel

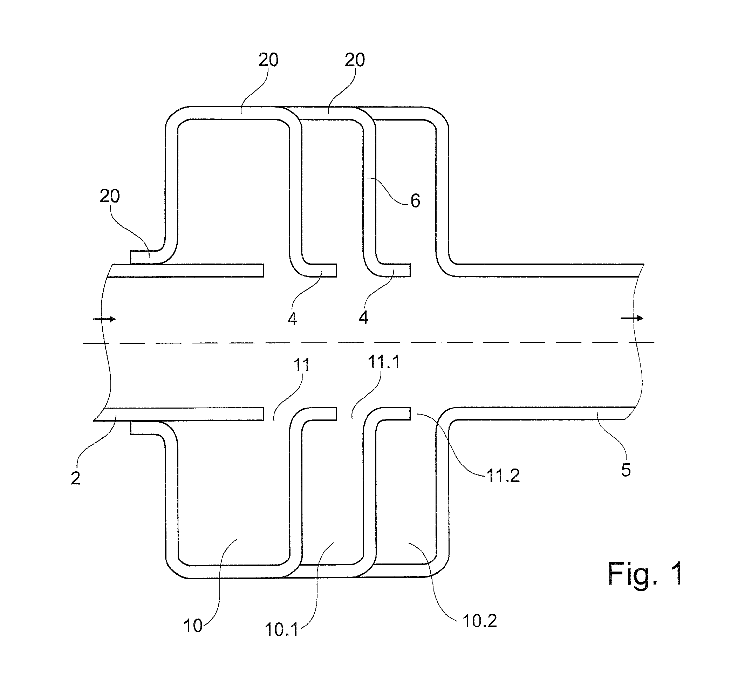

Der Mehrkammer-Resonator der Fig. 1 weist Kammern 10, 10.1, 10.2 verschiedener Längen und Volumina mit Verbindungsöffnungen 11, 11.1, 11.2 um die Rohrleitung auf. Die Kammern sind aussen durch erweiterte Bereiche 3 trichterartiger Rohrabschnitte 6 und innen durch die nicht erweiterten Endbereiche 4 der trichterartigen Rohrabschnitte 6, die kürzer sind als die erweiterten Bereiche 3, begrenzt. Nur die erste Kammer 10 weist als eine Aussenwand zusätzlich einen auf der zuführenden Rohrleitung 2 befestigten Deckel 7 auf, der mit dem erweiterten Endbereich 3 des nachfolgenden trichterartigen Rohrabschnitts 6 verbunden ist. In Fig. 1 ist schematisch eine Ausführungsform eines erfindungsgemäßen Resonators gezeigt. Am nicht erweiterten Endbereich des letzten trichterartig erweiterten Rohrabschnittes 6 schliesst sich die ableitende Rohrleitung 5 an.

Eine einfache Herstellung des erfindungsgemässen Resonators kann erfolgen, indem ein mit einer Aufweitung 3, deren Durchmesser der Summe des Rohrdurchmessers und zwei Kammerdurchmessern entspricht, versehener trichterartiger Rohrabschnitt 6 mit seinem nicht erweiterten Ende 4 an der abführenden Rohrleitung 5 angeschlossen wird. Hier kann ein übliches Befestigungsverfahren erfolgen, es ist aber auch möglich, das Ende der abführenden Rohrleitung 5 so umzuformen, dass sie in einem trichterartigen Rohrabschnitt 6 endet. Auf diesem trichterartigen Rohrabschnitt 6 wird ein nächster Rohrabschnitt 6 aufgesetzt und im Aussenbereich 20 daran befestigt, während eine Kammer 10 gebildet wird und die Verbindungsöffnung 11 zwischen dem nicht erweiterten Ende 4 und dem vorangehenden Rohrabschnitt 6 gebildet ist. Dadurch können je nach Frequenzdämpfungserfordernissen (bspw. Kammeranzahl) verschiedene trichterartige Rohrabschnitte 6 gesetzt werden. Für die letzte Kammer wird ein Rohrabschnitt 6 mit einem eine Rohrdurchgangsöffnung für das zuführende Rohr 2 verschliessender Deckel 7 vorgesehen.

Der Deckel 7 im Abstand einer Kammerlänge minus Öffnungslänge am nächsten trichterartigen Rohrabschnitt 6 befestigt. Dabei schliesst sich am Deckelrand das obere Ende eines trichterartigen Rohrabschnitts 6 an, an dem aber auch der Deckel 7 durch an sich bekannte Verfahren, wie IHU, angeformt sein kann (s. Fig. 1). Es wird eine Verbindungsöffnung 11 - z.B. ein umlaufender Schlitz - im Kammerbereich des zuführenden Rohrs 2 zwischen dessen Rohrende und der unteren Kante des trichterargen Rohrabschnitts 6 gebildet und so eine Verbindung zwischen Rohrleitungsinnerem und angeschlossenem Resonanzhohlraum 10 gebildet.

Das Befestigen der Rohrabschnitte untereinander kann bspw. durch Schweißen oder Löten, aber auch durch Falzen oder andere geeignete Verfahren erfolgen. Dadurch werden Kammern 10 um die Rohrleitung gebildet, die als Resonatoren wirken.

Beim schematisch in Fig. 1 dargestellten Helmholtz-Resonator ist es wesentlich, daß das Rohr 2, in dem sich stehende Wellen ausbilden würden, falls keine Resonatoren vorgesehen sind, mit weiteren Volumina, den Kammervolumen, in Verbindung steht. Die Volumina in den Kammern 10 haben andere Eigenfrequenzen als die Rohrleitung. Die Kammereigenfrequenz und die Rohrfrequenzen löschen sich im Idealfall aus oder bilden zumindest ausreichend Interferenzen, um ein Aufschaukeln einer Resonanz in der Rohrleitung oder eine Resonanzkatastrophe zu verhindern.

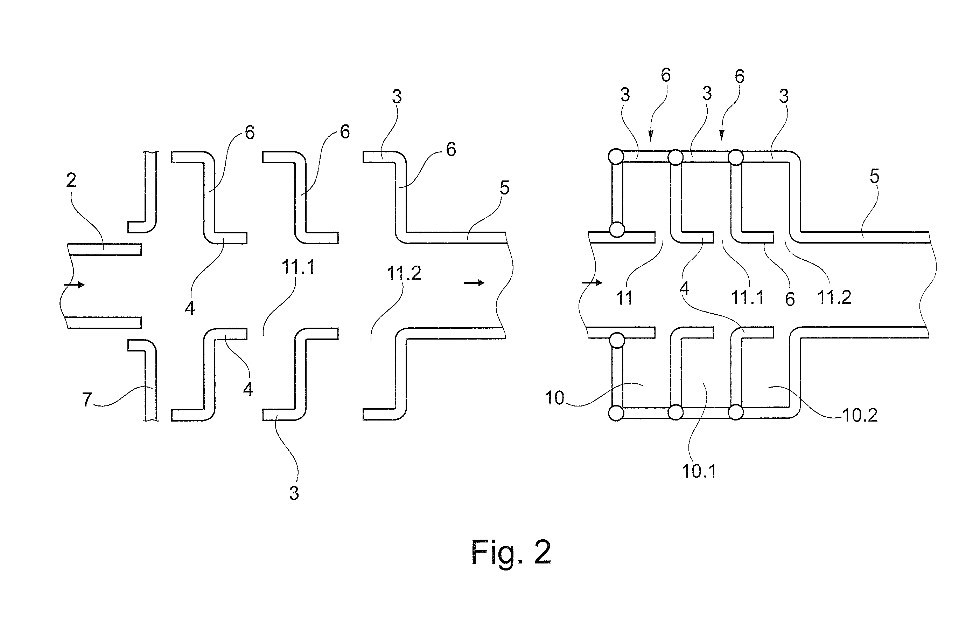

In Fig. 2 ist ein Zusammenbau eines Resonators schematisch im Schnitt dargestellt. Von links erkennt man die zuführende Rohrleitung 2; den darauf zu befestigenden Deckel 7; zwei trichterartige Rohrabschnitte 6 sowie einen mit der abführenden Rohrleitung 5 einstückig ausgebildeten weiteren trichterartigen Rohrabschnitt. Deutlich ist zu erkennen, dass die Wandhöhen des erweiterten Bereichs 3 der trichterartigen Rohrabschnitte 6 länger sind als diejenigen des nicht erweiterten Bereichs, welche dann die schlitzförmigen Öffnungen 11 bilden, über die ein Druckaustausch zwischen Rohrleitung und jeweils umgebender Kammer 10 möglich ist. Die notwendigen Verbindungen 20 für diese Ausführungsform sind in der schematischen Darstellung gezeigt.

In Fig. 3 sind Einzelteile zur Herstellung eines Resonators sowie der zusammengebaute Resonator perspektivisch dargestellt. Der Deckel 7 ist auf einer zuführenden Rohrleitung 2 befestigt und wird auf einen trichterartigen Rohrabschnitt 6 gesetzt, der auf den nächsten trichterartigen Rohrabschnitt 6 so aufgesetzt wird, dass die Kante des Bereichs grösseren Durchmessers 3 auf dem Ende des Bereichs grösseren Durchmessers des nachfolgenden trichterartigen Rohrabschnitts 6 zu liegen kommt und dort beide miteinander verbunden werden können. Als letzter Rohrabschnitt folgt hier eine abführendes Rohrleitung 5 mit angeformtem trichterartigem Abschnitt, wobei es aber auch möglich ist, diesen letzten Rohrabschnitt mehrteilig auszubilden - bspw, durch einen trichterartigen Rohrabschnitt 6, der an eine nicht erweiterte abführende Rohrleitung 5 angebunden wird.

In Fig. 4 ist deutlich gezeigt, wie die zuführende Rohrleitung 2 durch den Deckel 7 hindurchtritt, um die Innenwand der ersten Kammer 10 zu bilden

Bei Druckbeaufschlagung der Rohrleitung mit gasförmigen Medien werden in den Kammern 10, 10.1, 10.2, 10.3 über die Verbindungsöffnungen 11, 11.1, 11.2 stehende Wellen durch Anregung der Mediensäule im Rohr 2 mit einer vorherbestimmten Frequenz ausgebildet. Die Kammerabmessungen werden so gewählt, dass die darin ausgebildete schwingende Mediensäule eine Frequenz besitzt, welche über Interferenz bestimmten Eigenschwingungen im Rohrinneren auslöscht. Die Ausgestaltung des Volumens der Kammern 10 ist dem Fachmann geläufig und hängt vom Rohrdurchmesser, dem darin transportierten Medium und der Grösse der Öffnungen 11 ab. In gleicher Weise wird bei Vorsehen jeder weiteren Kammer 10.1, 10.2, etc. weitere Schwingungsfrequenz in derselben ausgelöst, welche eine andere Frequenz auslöschen kann.

Je nach Anforderung können erfindungsgemäß Resonatoren mit mehreren Kammern unterschiedlicher Volumina nach einem Baukastensystem, wie in Fig. 3 und 4 beispielhaft gezeigt, hergestellt werden, die dann mehrere Resonanzfrequenzen auslöschen kann. Die Volumina werden dabei durch die leicht über Trennverfahren einstellbaren Längen der im übrigen gleichen trichterförmigen Rohrabschnitte bestimmt.

Die Auswahl der Ausführungsform sowie der Verbindungstechnik hängt stark vom verwendeten Material, dem zu dämpfenden Medium und den Abmessungen des Dämpfers ab. Als Verbindungstechnik für die Resonatorkomponenten eignet sich jegliche im technischen Gebiet übliche Technik - bei Metallrohren bietet sich bspw. Schweissen jeglicher Art, Falzen, Löten oder Kleben an. Selbstverständlich kann am erfindungsgemäßen Kammerresonator anstelle eines längeren ersten oder zweiten Rohrs 4, 5 auch nur ein kurzes Anschlußrohrstück für eine an- oder abführende Leitung vorgesehen werden.

Obwohl die Erfindung anhand bevorzugter Ausführungsbeispiele näher erläutert wurde, ist sie keineswegs auf dasselbe eingeschränkt sondern dem Fachmann ist offensichtlich, dass verschiedenste Ausführungen im Rahmen des Schutzumfangs der beiliegenden Ansprüche möglich sind.

### Bezugszeichenliste

- 2: zuführende Rohrleitung
- 3: aufgeweiter Bereich von 5 oder 6
- 4: erstes Rohr
- 5: abführende Rohrleitung
- 6: trichterartiger Rohrabschnitt
- 7: Deckel
- 10, 10.1, 10.2: Kammern
- 11, 11.1, 11.2: Verbindungsschlitze der Kammern 10, 10.1, 10.2
- 20: Verbindung/Anschluss

## Patentansprüche

1. Kammerresonator zur Dämpfung von Geräusch in einer Rohrleitung, mit mindestens zwei um eine Rohrleitung mit zuführender Rohrleitung (2) und ableitender Rohrleitung (5) verlaufenden Kammern (10, 10.1, 10.2), die über jeweils eine Verbindungsöffnung (11, 11.1, 11.2) zwischen Rohrleitungsinnerem und Kammer (10, 10.1, 10.2) zum Druckausgleich dazwischen mit dem Rohrleitungsinneren verbunden ist; wobei die Kammern (10, 10.1, 10.2) gebildet sind durch:
trichterartige gestufte Rohrabschnitte (6), die einen aufgeweiteten Bereich (3) und einen nicht erweiterten Bereich (4) aufweisen, wobei der aufgeweitete Bereich (3) einen Durchmesser entsprechend der Summe des Rohrleitungsdurchmessers und zwei Kammerhöhen besitzt und der nicht aufgeweitete Bereich (4) Rohrleitungsdurchmesser hat; wobei Resonanzkammern (10, 10.1, 10.2) jeweils gebildet sind durch zwei ineinander befestigte trichterartig gestufte Rohrabschnitte (6), wobei die trichterartigen Rohrabschnitte (6) an ihren erweiterten Enden mit der oberen Stufe des vorangehenden trichterartigen Rohrabschnitts (6) dichtend verbunden sind und das untere Ende des jeweiligen trichterartig gestuften Rohrabschnitts (6) die Kammerinnenwand mit Verbindungsöffnung (11.1, 11.2) bildet;
wobei die erste Resonanzkammer (10) gebildet ist durch den Endabschnitt der zuführenden Rohrleitung (2), auf dem ein als Kammerabschluss dienender Deckel (7) mit Rohrdurchgangsöffnung dicht angebracht ist und einem daran anschliessenden trichterartig gestufter Rohrabschnitt (6),
so dass zwischen Rohrende der zuführenden Rohrleitung (2) und der unteren Kante des trichterartigen gestuften Rohrabschnitts (6) eine erste Verbindungsöffnung (11) gebildet ist.

2. Resonator nach Anspruch 1, **dadurch gekennzeichnet, dass** die Kammerbegrenzung der ersten Kammer (10) durch einen einstückigen, eine Erweiterung in Form der Aussenkontur einer Kammer aufweisenden Rohrabschnitt (6) hergestellt ist, der auf der zuführenden Rohrleitung (2) befestigt ist.

3. Resonator nach einem der vorangehenden Ansprüche, dadurch gekennzeichent, dass alle Rohrabschnitte (2, 6, 5) aus gleichem Material bestehen.

4. Resonator nach Anspruch 1, **dadurch gekennzeichnet, dass** zumindest ein Rohrabschnitt ein anderes Material als andere Rohrabschnitte besitzt.

5. Resonator nach einem der Ansprüche 1 bis 3, **dadurch gekennzeichnet, dass** die Verbindung der Rohrabschnitte (6, 2, 5) aneinander durch Schweißen, Falzen, Löten, Fügen, Kleben dicht ist.

6. Resonator nach Anspruch 4, **dadurch gekennzeichnet, dass** die Befestigung ausgewählt ist aus der Gruppe: Falze, Schweißstellen, Lötstellen, Schrauben, Nieten.

7. Resonator nach einem der vorangehenden Ansprüche, **dadurch gekennzeichnet, dass** er zumindest teilweise aus Metall, wie Aluminiumblech, Stahlblech gebildet ist.
